# DEMANDE DE BREVET EUROPEEN

(11) **EP 2 073 468 A1**
(43) Date de publication de la demande: **24.06.2009**
(21) Numéro de dépôt: 07301709.7
(22) Date de dépôt: 19.12.2007
(51) Int. Cl.: H04L 12/58

(54) **Objet portable pour filtrer un message entrant non voulu, terminal et procédé correspondants**

(71) Demandeur: GEMPLUS, 13420 Gémenos (FR)
(72) Inventeur: Tuilier, Edmond, 13012, MARSEILLE (FR); Ducreux, Eric, 13012, MARSEILLLE (FR)

(57) **Abrégé**

L'invention concerne un procédé 30 pour filtrer un message entrant non voulu. Un objet portable comprend des moyens de mémorisation d'au moins une première liste d'au moins un identifiant d'au moins un destinataire autorisé et des moyens de réception d'un message entrant depuis l'extérieur.

Selon l'invention, le procédé comprend des étapes selon lesquelles l'objet portable met en oeuvre une étape 36 de vérification d'un message entrant reçu et provenant d'un expéditeur, en fonction de ladite au moins une première liste, une étape de filtrage du message entrant reçu, selon laquelle, si l'expéditeur du message entrant reçu a un identifiant distinct de l'identifiant de chaque destinataire autorisé de ladite au moins une première liste, au moins une action prédéterminée 310 est effectuée.

L'invention concerne également un objet portable et un terminal correspondants.

## Description

### Domaine technique de l'invention :

La présente invention concerne, d'une façon générale, un objet portable pour filtrer un message entrant non voulu.

La présente invention porte également sur un terminal apte à coopérer avec un tel objet portable.

Enfin, la présente invention est relative à un procédé pour filtrer un message entrant non voulu.

Dans le présent document de brevet, on entend par l'expression « objet portable » (ou « token » en langue anglaise), un dispositif électronique comportant des moyens de traitement et de contrôle de données et des moyens pour communiquer au moins dans un sens de communication avec l'extérieur.

On désigne, dans le présent document de brevet, par le mot « pourriel » (ou « spam » en langue anglaise), une communication électronique notamment un message électronique non sollicité par le ou les destinataires du message transmis souvent en masse à des fins malicieuses, publicitaires ou malhonnêtes.

### Etat de la technique :

Dans le monde de la téléphonie mobile, il est connu de recevoir, par exemple, sur son téléphone mobile, un pourriel, par exemple de type SMS (acronyme pour « Short Message Service » en langue anglaise) alors qu'un utilisateur associé au téléphone mobile ne l'a jamais sollicité.

Ainsi, de nos jours, le nombre d'émissions de pourriels à destination de destinataires ne les ayant pas sollicité augmente, de plus en plus vite, et ce de manière incessante.

Du fait que le pourriel n'est pas sollicité par son destinataire, on peut considérer qu'un tel pourriel pollue inutilement son destinataire et constitue une nuisance non négligeable pour chaque utilisateur l'ayant reçu.

En effet, chaque destinataire se voit contraint de lire le pourriel avant de s'apercevoir qu'il ne l'a pas sollicité, qu'il s'agit d'un pourriel et éventuellement de le supprimer.

Le document de brevet US 2007/0143422 décrit une solution cherchant à filtrer des messages entrants non désirés, en les bloquant au niveau réseau.

Cependant, une telle solution connue présente certains inconvénients majeurs.

En effet, une telle solution est basée sur l'utilisation d'un annuaire (ou « phonebook » en langue anglaise) prévu au sein d'un réseau de radiotéléphonie impliqué, désigné infra par l'expression « annuaire réseau ».

Or, l'utilisation d'un annuaire réseau nécessite d'être automatiquement mis à jour depuis chaque téléphone mobile avec un annuaire prévu au sein du téléphone mobile concerné, désigné infra par l'expression « annuaire téléphone ».

Toutefois, une telle mise à jour de l'annuaire réseau impose la transmission de données supplémentaires propres à un annuaire téléphone propre à chaque téléphone mobile.

De plus, une telle mise à jour de l'annuaire réseau impose que chaque téléphone mobile soit connecté au moment de la mise à jour pour fournir des données propres à l'annuaire téléphone.

En outre, entre deux mises à jour de l'annuaire réseau, un certain temps s'écoule. Par conséquent, certains pourriels sont filtrés alors qu'avec la dernière mise à jour de l'annuaire téléphone, ils ne l'auraient pas été. En d'autres termes, un message entrant a pu être considéré comme pourriel alors qu'il ne l'était pas. De ce fait, le message entrant est bloqué au niveau du réseau sans être transmis au destinataire alors qu'il est désiré.

Enfin, quand bien même, la dernière mise à jour de l'annuaire réseau a eu lieu pour chaque téléphone mobile, elle implique un encombrement relativement important du réseau de radiotéléphonie. En effet, un flux de données relatives à l'ensemble des annuaires téléphone est généré pour l'ensemble des téléphones mobiles rattachés au réseau de radiotéléphonie concerné pour alimenter l'annuaire réseau du tout dernier annuaire téléphone.

### Exposé de l'invention :

L'invention cherche à s'affranchir des inconvénients majeurs précédemment indiqués en fournissant un objet portable pour filtrer un message entrant non voulu.

Plus particulièrement, l'invention est un objet portable pour filtrer un message entrant non voulu. L'objet portable comporte des moyens de mémorisation d'au moins une première liste d'au moins un identifiant d'au moins un destinataire autorisé et des moyens de réception d'un message entrant depuis l'extérieur.

Selon l'invention, l'objet portable comprend des moyens pour vérifier un message entrant reçu et provenant d'un expéditeur en fonction de ladite au moins une première liste, des moyens pour filtrer le message entrant reçu, si l'expéditeur du message entrant reçu a un identifiant distinct de l'identifiant de chaque destinataire autorisé de ladite au moins une première liste, au moins une action prédéterminée est effectuée.

Le principe général de l'invention repose sur une nouvelle approche utilisant un objet portable communiquant adapté pour filtrer un message entrant non voulu.

On comprend que le filtrage est basé sur un test de comparaison de l'identifiant propre à l'expéditeur du message entrant par rapport à au moins un identifiant propre à un destinataire autorisé.

Au contraire de la solution connue explicitée supra bloquant un message entrant considéré comme non désiré, un message entrant est reçu par l'objet portable destinataire du message entrant même lorsqu'il s'agit d'un message entrant non voulu.

Dans le cas où le message entrant reçu est considéré comme étant un message entrant non voulu suite à une comparaison de l'identifiant du message entrant avec l'identifiant de chaque destinataire autorisé listé, une ou plusieurs actions prédéterminées sont prévues.

L'utilisateur n'a ainsi pas besoin d'intervenir pour lire et constater que le message entrant est désiré ou non désiré avant d'effectuer une éventuelle suppression du message entrant. Le filtrage du message entrant non voulu est automatique, et l'utilisateur peut ne pas être tenu informé de la réception d'un ou plusieurs messages entrants non voulus.

On comprend que l'objet portable est apte à comparer lui-même en local si l'expéditeur du message entrant non voulu appartient à une liste de destinataires autorisés que l'objet portable a mémorisée à demeure, et si tel est le cas, une ou plusieurs actions prédéterminées surviennent.

De cette manière, l'objet portable est le seul acteur impliqué n'impliquant pas forcément de transmission de données à l'extérieur de l'objet portable.

Contrairement à la solution de l'art antérieur, le réseau de télécommunication concerné n'est pas impliqué pour filtrer un message entrant non voulu consistant à bloquer le message entrant non voulu au niveau du réseau.

Toujours contrairement à la solution de l'art antérieur, toute mise à jour de la liste de destinataires autorisés est immédiatement mémorisée par l'objet portable, et ce, sans transmettre une donnée de mise à jour sur le réseau de télécommunication duquel l'objet portable reçoit le message entrant non voulu. Aucun encombrement du réseau de télécommunication n'est alors généré.

En outre, il est certain que l'objet portable dispose de la dernière mise à jour de la liste de destinataires autorisés.

Par conséquent, contrairement à la solution de l'art antérieur, la dernière mise à jour de la liste de destinataires autorisés est effective dès sa création, et non pas suite à un laps de temps la séparant de la précédente mise à jour au niveau du réseau qui peut être relativement long.

II convient de noter que l'invention n'impose aucune contrainte quant à la nature du message entrant non voulu. En d'autres termes, l'objet portable de l'invention peut être utilisé pour tout type de message entrant non voulu.

Selon un autre aspect, l'invention est un procédé pour filtrer un message entrant non voulu mis en oeuvre par un objet portable.

Plus exactement, un objet portable comporte des moyens de mémorisation d'au moins une première liste d'au moins un identifiant d'au moins un destinataire autorisé et des moyens de réception d'un message entrant depuis l'extérieur.

Selon l'invention, l'objet portable met en oeuvre une étape de vérification d'un message entrant reçu et provenant d'un expéditeur, en fonction de ladite au moins une première liste, une étape de filtrage du message entrant reçu, selon laquelle, si l'expéditeur du message entrant reçu a un identifiant distinct de l'identifiant de chaque destinataire autorisé de ladite au moins une première liste, une ou plusieurs actions prédéterminée sont effectuées.

Un utilisateur de l'objet portable n'est donc pas inutilement perturbé ou dérangé par un message entrant non voulu.

### Description des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un schéma simplifié d'un téléphone mobile, en tant que terminal, relié, d'une part, à un réseau de radiotéléphonie, et d'autre part, à une carte à puce, en tant qu'objet portable selon l'invention ;
- la figure 2 illustre un schéma détaillé de la puce de la carte à puce de la figure 1 ; et
- la figure 3 présente un organigramme simplifié d'un exemple d'un procédé mis en oeuvre par l'objet portable de la figure 1 pour filtrer un message entrant non voulu.

### Description d'un mode de réalisation particulier :

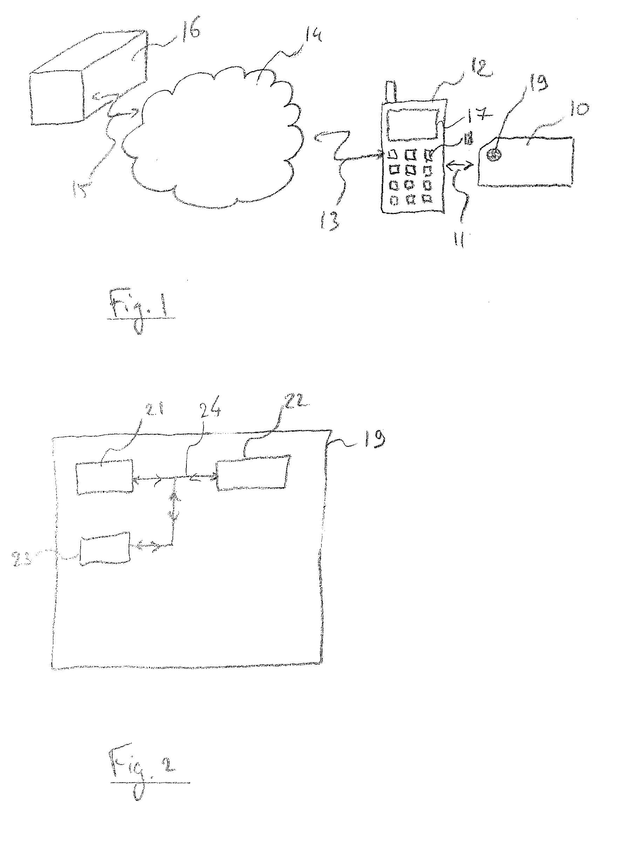

Comme montré sur la figure 1, un objet 10 portable est relié, au travers d'un terminal 12 hôte et d'un réseau 14 de télécommunication, à un serveur 16.

Il faut entendre dans le présent document de brevet par le mot « serveur », un dispositif électronique comprenant des moyens de traitement et de contrôle de données et des moyens de mémorisation mémorisant au moins un programme informatique applicatif, ou application, et accessible depuis l'extérieur.

Le serveur 16 est utilisé pour une transmission en masse de messages publicitaires, de messages commerciaux, de messages malhonnêtes, par exemple de type pornographiques, et/ou malicieux cherchant à installer une application par exemple visant à voler des données et/ou à faire dysfonctionner un dispositif destinataire d'un des messages.

Chacun de ces messages constitue un pourriel.

En outre, un ordinateur personnel (ou PC acronyme pour « Personal Computer » en langue anglaise) (non représenté) peut être relié au réseau 14 de télécommunication et transmettre le même type de messages que ceux indiqués ci-dessus à tout terminal 12 également connecté au réseau de télécommunication.

Une telle transmission en masse est effectuée auprès de multiples destinataires attachés au réseau 14 de radiotéléphonie.

Le serveur 16 est relié, via une liaison 15 filaire ou non filaire, au réseau 14 de télécommunication.

Le réseau 14 de télécommunication peut être un réseau public ou privé de type Internet ou de type Intranet ou autre.

Le réseau 14 de télécommunication peut être relié, via une liaison filaire ou 13 non filaire, au terminal 12.

Le terminal 12 est doté d'un écran 17 pour afficher des informations, et d'un clavier 18 pour qu'un utilisateur puisse saisir des données.

Le terminal 12 est relié à l'objet 10 portable au travers d'au moins une interface de communication de type à contact et/ou au moins une interface de communication de type sans contact.

Le terminal 12 est, par exemple, un téléphone 12 mobile. La liaison 13 non filaire constitue un lien radiofréquence.

Le réseau 14 de télécommunication est un réseau de radiotéléphonie.

Selon une variante de réalisation, le terminal est un assistant personnel numérique (ou PDA acronyme pour « Personal Digital Assistant » en langue anglaise).

Selon une autre variante de réalisation, le terminal est un ordinateur personnel (ou PC acronyme pour « Personal Computer » en langue anglaise).

Le téléphone 12 mobile est apte à recevoir un message depuis le réseau 14 de radiotéléphonie, y compris un message non voulu par le porteur de l'objet 10 portable.

Selon une alternative de réalisation (non représentée), une seule entité physique(et non pas deux entités physiques distinctes), en tant que terminal, joue les rôles de téléphone mobile et de carte à puce utilisée pour identifier un abonné au réseau de radiotéléphonie concerné. D'après une telle alternative, il s'agit d'un terminal apte à exercer l'ensemble des fonctions correspondantes du téléphone mobile et de la carte à puce.

Le message peut constituer une communication ou appel entrant, un message texte de type SMS, à objets multimédia (images, audio, vidéo, et/ou texte) de type MMS (acronyme pour « Multimedia Messaging Service » en langue anglaise), de type eSMS (acronyme pour « enhanced Short Message Service » en langue anglaise), de type eMMS (acronyme pour « enhanced Multimedia Messaging Service » en langue anglaise), de type courriel (ou email en langue anglaise) et/ou autre.

L'objet 10 portable est, par exemple, une carte 10 à puce de type SIM (acronyme pour « Subscriber Identity Module » en langue anglaise) ou équivalent.

La carte 10 à puce comporte une puce 19. La carte 10 à puce est amovible et destinée à être insérée dans un lecteur à contact de type ISO (acronyme pour « International Standard Organization » en langue anglaise) 7816 ménagé au sein du téléphone 12 mobile.

Le téléphone 12 mobile est apte à recevoir et transmettre des données depuis le réseau 14 de radiotéléphonie.

Selon une variante de réalisation (non représentée), le téléphone mobile comporte des moyens pour identifier son porteur vis- à-vis du réseau de radiotéléphonie auquel le téléphone mobile est associé. De ce fait, le téléphone mobile ne coopère pas avec aucun support d'identification de son porteur de type carte SIM pour communiquer au travers du réseau de radiotéléphonie.

La carte 10 à puce est destinée à coopérer avec le téléphone 12 mobile, pour communiquer au travers du réseau 14 de radiotéléphonie.

Il convient de noter que l'objet 10 portable peut également revêtir de multiples formes. Il peut consister en, par exemple, un « dongle » ne nécessitant pas de lecteur spécifique pour accéder aux données dont le dongle dispose, ou une clef de type USB (acronyme pour « Universal Serial Bus » en langue anglaise), SD (acronyme pour « Secure Digital » en langue anglaise) et/ou MMC (acronyme pour « Multi-Media Card » en langue anglaise).

Le téléphone 12 mobile reçoit le pourriel issu du serveur 16, et le transmet à la puce 19.

La puce 19 de la carte 10 à puce est apte à filtrer tout message entrant non voulu par son porteur, tel le pourriel reçu au travers du téléphone 12 mobile.

Pour ce faire, la puce 19 supporte une application de filtrage de tout message entrant résidente dans la puce 19. On peut qualifier une telle application d'« anti-pourriel » ou d'« anti-spam », permettant de ne pas annoncer un message non identifié par son expéditeur comme faisant partie d'au moins une liste de destinataires autorisés par l'utilisateur.

Une telle application est soit chargée au moment de sa personnalisation en fin de production soit téléchargée depuis un serveur utilisé pour la configuration de cartes à puce.

L'application permet, tout d'abord, d'identifier un numéro de téléphone, un nom, et/ou une adresse associés au message entrant reçu ou un ou plusieurs autres identifiants de l'expéditeur de tout message entrant et reçu du réseau 14 de radiotéléphonie. Une fois l'identifiant (ou les identifiants) déterminé(s), l'application prévoit de le comparer à un identifiant mémorisé pour chaque destinataire compris au sein d'une ou plusieurs listes d'identifiants de destinataires autorisés.

De préférence, la ou les listes d'identifiants de destinataires autorisés sont mémorisées, au sein de la puce 19, en tant qu'annuaire carte SIM, et/ou du téléphone 12 mobile, en tant qu'annuaire téléphone.

De préférence, de telles listes d'identifiants de destinataires autorisés sont préexistantes, et aucune nouvelle liste d'identifiants de destinataires autorisés n'est à créer, et éventuellement à mettre à jour. Du fait qu'aucune liste d'identifiants de destinataires autorisés n'est créée, aucune place supplémentaire correspondante en mémoire n'est occupée.

De telles listes contiennent les toutes dernières mises à jour effectuées par un utilisateur de la carte 10 à puce et/ou du téléphone 12 mobile ou une tierce personne dûment autorisée.

Selon une alternative de réalisation, une liste d'identifiants de destinataires autorisés dédiée constituant une liste de référence consultée lors de la réception de tout message entrant est créée pour un filtrage éventuel du message entrant reçu.

Si l'identifiant de l'expéditeur correspond à celui du serveur 16 non référencé dans l'une quelconque de la ou des listes prises en compte pour le contrôle, l'application prévoit une ou plusieurs actions prédéterminées.

La figure 2 montre, de manière détaillée, la puce 19 de la carte 10 à puce, en tant qu'objet portable.

La puce 19 comprend un microprocesseur 21, une ou des mémoires de type non volatile représentées par un bloc 22 mémoire, et un port 23 d'entrée/sortie, reliés ensemble via un bus 24 interne de communication de données.

Le microprocesseur 21 ou un microcontrôleur contrôle et traite les données de la puce 19. Le microprocesseur 21 constitue l'unité centrale de la puce 19 de commande de ses éléments.

Selon une variante de réalisation, une unité logique contrôle et traite des données de la puce, et se substitue à un microprocesseur ou à un microcontrôleur.

Le microprocesseur 21 exécute l'application anti-pourriel après détection de tout message entrant reçu par l'intermédiaire du port 23 d'entrée/sortie.

La ou les mémoires de type non volatile, constituant le bloc 22 mémoire, sont des mémoires qui conservent les données stockées en l'absence d'alimentation électrique.

On peut notamment citer les mémoires mortes de type ROM (acronyme pour « Read Only Memory » en langue anglaise), et/ou de type EEPROM (acronyme pour « Electrically-Erasable Programmable Read-Only Memory » en langue anglaise).

Le bloc 22 mémoire stocke un système d'exploitation permettant le fonctionnement de la puce.

En outre, le bloc 22 mémoire stocke l'application anti-pourriel, la ou les listes de référence pour contrôler la présence ou l'absence de l'identifiant de l'expéditeur du message entrant de cette ou ces listes de référence, et le ou les fichiers de tout type de message de type vocal, SMS, MMS, eSMS, eMMS, et/ou d'autre(s) gérés par la puce 19.

Le microprocesseur 21, en exécutant l'application anti-pourriel, décide, suite au contrôle, s'il s'agit d'un message entrant provenant d'un expéditeur référencé en tant que destinataire autorisé, d'autoriser, par exemple, une annonce de la réception du dernier message entrant reçu avec ou sans contenu ou, s'il s'agit d'un message entrant provenant d'un expéditeur non référencé en tant que destinataire autorisé, d'exécuter une ou plusieurs actions prédéterminées.

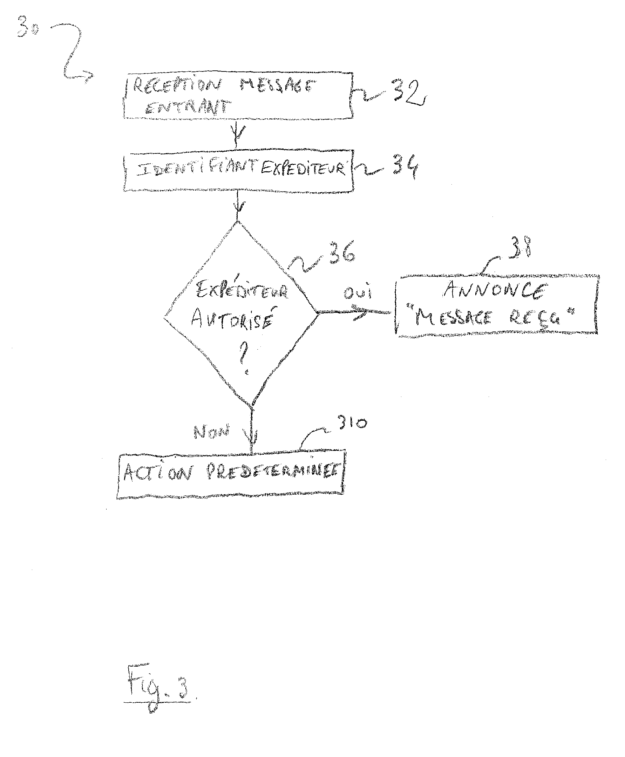

On décrit, à présent, en relation avec l'organigramme simplifié de la figure 3, un mode de réalisation d'un procédé 30 pour filtrer un message entrant.

Tout d'abord, le téléphone mobile reçoit 32 depuis le réseau de radiotéléphonie extérieur un message entrant de type SMS transmis à la puce de la carte à puce.

De préférence, un évènement est généré dès la réception d'un SMS par la puce. L'évènement généré déclenche l'exécution de l'application anti-pourriel par la puce.

La puce stocke, dans un fichier SMS de réception du ou des messages SMS reçus, le dernier message SMS entrant.

Selon une variante de réalisation, la mise à jour du fichier de SMS déclenche l'exécution de l'application anti-pourriel par la puce.

Puis, la puce identifie 34 tout ou partie du numéro de téléphone d'origine du message SMS entrant, en tant qu'identifiant de l'expéditeur associé au message entrant en cours de traitement.

Ensuite, la puce vérifie 36 si l'identifiant de l'expéditeur du message entrant est connu d'au moins une liste d'identifiants de destinataires autorisés stockée dans la puce et/ou dans le téléphone mobile.

En tant que liste d'identifiants de destinataires autorisés, il peut s'agir d'un fichier annuaire incluant un ou plusieurs identifiants du ou des destinataires d'un appel sortant éventuellement limité à ceux autorisés, tel le fichier annuaire de type ADN (acronyme pour « Abbreviated Dialing Number » en langue anglaise) pour un mode dit non restreint ou d'un fichier annuaire de type FDN (acronyme pour « Fixed Dialing Number » en langue anglaise) pour un mode dit restreint.

L'annuaire est une liste de noms associés à des identifiants de destinataires éventuellement restreinte permettant de favoriser un appel sortant.

En outre, la liste d'identifiants de destinataires autorisés peut prendre en compte un fichier incluant au moins un identifiant déjà présent ou non dans l'annuaire qui a fait l'objet d'un appel sortant passé.

Optionnellement, un opérateur du réseau 14 de radiotéléphonie met en mémoire, préalablement à une livraison de la carte 10 à puce (ou du téléphone mobile effectuant également la fonction d'identification de son porteur), au sein du fichier de type ADN, un ou plusieurs identifiants de destinataires autorisés. Selon une variante de réalisation, l'opérateur du réseau 14 de radiotéléphonie crée, de son propre fait, un autre fichier dédié pour mémoriser un ou plusieurs identifiants de destinataires autorisés. Les identifiants de destinataires autorisés par l'opérateur du réseau de radiotéléphonie sont pris en compte par l'application d'anti-pourriel, pour filtrer un message entrant reçu.

On rappelle que, tel que connu en soi, le fichier de type FDN comporte une liste d'identifiants du ou des seuls destinataires d'appel sortant autorisés. L'utilisateur ne peut appeler un numéro de téléphone exclu d'une telle liste. Le fichier FDN est utilisé par exemple par un parent pour son enfant porteur de la carte 10 à puce. Seul le parent ou une personne autorisée est capable de mettre à jour ce fichier, excluant ainsi l'enfant porteur de la carte 10 à puce de modifier le fichier FDN.

On rappelle que l'utilisation, connue en soi, du fichier annuaire de type ADN ou FDN est de faciliter ou d'interdire respectivement un message et/ou un appel sortant.

Lorsque la liste d'identifiants de destinataires autorisés est constituée par le fichier annuaire de type ADN ou FDN déjà existant, on l'utilise, à nouveau, pour filtrer un message entrant non voulu.

Dans l'affirmative, c'est-à-dire dès que l'identifiant de l'expéditeur du message entrant correspond à l'un des identifiants des destinataires autorisés de la ou des listes, un message visuel prédéfini tel que « vous avez reçu un nouveau message SMS », ou un icône visuel prédéfini est affiché à l'écran du téléphone mobile, pour annoncer 38 la réception d'un nouveau message SMS ou afficher le nouveau message SMS avec son contenu dernièrement reçu, tel que connu en soi.

Dans la négative, à savoir si l'identifiant de l'expéditeur du message entrant est distinct de chaque identifiant de tous les destinataires autorisés enregistrés au sein de la ou des listes consultées par la puce, la puce exécute 310 une ou plusieurs actions prédéterminées.

En tant qu'action(s) prédéterminée(s), on cite notamment :
- un blocage d'annonce du message entrant reçu ;
- un effacement du message entrant reçu ;
- une mémorisation du message entrant reçu ;
- un passage à un état relatif au message entrant reçu et correspondant à un message entrant reçu et lu ;
- un ajout d'une marque désignant que le message entrant reçu constitue un « pourriel » ;
- une transmission à l'expéditeur d'un message prédéterminé ;
- une transmission à un serveur ; et/ou
- une transmission à un tiers d'un message prédéterminé.

De préférence, aucune annonce présentant ou non le message entrant reçu avec ou sans contenu ne se produit. Si l'expéditeur d'un message entrant non voulu n'est pas référencé dans la liste de destinataires autorisés, alors le message entrant non voulu n'est nullement annoncé. De cette manière, un porteur de la carte 10 à puce n'est pas informé, par l'intermédiaire d'un message écrit ou oral (ou autre), de la réception d'un nouveau message entrant reçu.

Seul un message entrant dont l'expéditeur est référencé dans la liste de destinataires autorisés peut être annoncé au porteur de la carte 10 à puce.

De manière optionnelle, le téléphone mobile est informé que le dernier message entrant a été pris en compte, par exemple en changeant l'état d'un drapeau (ou flag en langue anglaise) consulté par le téléphone mobile pour savoir si le dernier message entrant a été pris en compte.

Egalement de manière optionnelle, la puce supprime du fichier SMS de réception de messages SMS le dernier message entrant reçu considéré comme non désiré car non autorisé.

Encore de manière optionnelle, le dernier message entrant reçu est stocké au sein d'un fichier particulier rassemblant tous les messages entrants identifiés comme étant non voulus, et donc écartés. Un utilisateur peut alors vérifier s'il en a déjà pris connaissance et/ou si le message entrant reçu est bien non désiré. Si tel n'est pas le cas, il peut également être envisagé que l'utilisateur peut déplacer le message entrant classé non désiré dans un autre fichier, tel celui des messages SMS reçus. Il peut être envisagé de pouvoir supprimer en tout ou partie le fichier de messages entrants écartés, à l'aide d'un bouton de commande dédié prévu sur le téléphone mobile.

Toujours de manière optionnelle, un message texte ou visuel prédéfini tel que « votre enfant a reçu un message non autorisé » éventuellement accompagné du message entrant reçu et écarté est transmis à un téléphone mobile relié au réseau de radiotéléphonie et associé à un parent de l'enfant et/ou un serveur répertoriant tous les messages entrants reçus non voulus par un parc de téléphones mobiles. Ainsi, le parent contrôlant le fichier FDN de l'objet portable de l'enfant et/ou le serveur sont informés à chaque réception d'un pourriel identifié par l'application anti-pourriel.

Optionnellement, un message texte ou visuel prédéfini tel que « votre message a été reçu et écarté par son destinataire » éventuellement accompagné du message entrant reçu et écarté est transmis à l'expéditeur du message concerné.

L'invention propose un mécanisme simple et peu coûteux pouvant éviter une consultation de tout message entrant non désiré par un utilisateur de l'objet portable destinataire.

L'invention permet, en particulier, d'automatiser une non-consultation d'annonce de messages, par exemple, issus d'une machine, qui transmet, de manière automatisée, un message à une autre machine qui ne lui est, en fait, pas destiné car l'identifiant de l'objet destinataire est erroné. Dans un tel contexte de machine à machine ou « MtoM » (« Machine to Machine » en langue anglaise), une option « aucune mémorisation de pourriels » est, de préférence, activée pour supprimer, automatiquement, les messages entrants reçus et non voulus, afin de diminuer le nombre d'opérations de maintenance.

## Revendications

1. Objet (10) portable pour filtrer un message entrant non voulu, l'objet portable comportant des moyens (22) de mémorisation d'au moins une première liste d'au moins un identifiant d'au moins un destinataire autorisé et des moyens (23) de réception d'un message entrant depuis l'extérieur,
**caractérisé en ce que** l'objet portable comprend :
- des moyens (21, 22, 24) pour vérifier un message entrant reçu et provenant d'un expéditeur (16) en fonction de ladite au moins une première liste,
- des moyens (21) pour filtrer le message entrant reçu, si l'expéditeur du message entrant reçu a un identifiant distinct de l'identifiant de chaque destinataire autorisé de ladite au moins une première liste, au moins une action prédéterminée est effectuée.

2. Objet portable selon la revendication 1, dans lequel ladite au moins une première liste d'au moins un identifiant d'au moins un destinataire autorisé est un annuaire.

3. Objet portable selon la revendication 1 ou 2, dans lequel ladite au moins une première liste comprend au moins un fichier incluant au moins un identifiant du ou des seuls destinataires d'appel sortant autorisés.

4. Objet portable selon l'une des revendications 1 à 3, dans lequel l'objet portable comprend des moyens (22) de mémorisation d'au moins un message entrant reçu non voulu.

5. Objet portable selon l'une des revendications 1 à 4, dans lequel le message entrant reçu comprend au moins un des éléments suivants :
- un appel téléphonique ;
- un message de type texte ;
- un message de type vidéo .

6. Objet portable selon l'une des revendications 1 à 5, dans lequel ladite au moins une action prédéterminée comprend au moins un élément appartenant au groupe comprenant :
- un blocage d'annonce du message entrant reçu ;
- un effacement du message entrant reçu ;
- un passage à un état relatif au message entrant reçu et correspondant à un message entrant reçu et lu ;
- - une transmission à l'expéditeur d'un message prédéterminé ;une transmission à un serveur ;
- une transmission à un tiers d'un message prédéterminé.

7. Terminal pour filtrer un message entrant non voulu, le terminal comprenant des moyens de réception d'un message entrant depuis l'extérieur, le terminal comprenant ou étant relié à des moyens de mémorisation d'au moins une première liste d'au moins un identifiant d'au moins un destinataire autorisé,
**caractérisé en ce que** le terminal comprend :
- des moyens pour vérifier un message entrant reçu et provenant d'un expéditeur en fonction de ladite au moins une première liste,
- des moyens pour filtrer le message entrant reçu, si l'expéditeur du message entrant reçu a un identifiant distinct de l'identifiant de chaque destinataire autorisé de ladite au moins une première liste, au moins une action prédéterminée est effectuée.

8. Terminal selon la revendication 7, dans lequel le terminal comprend des moyens pour identifier un porteur du terminal.

9. Terminal selon la revendication 7, dans lequel le terminal comprend des moyens pour coopérer avec un objet portable, l'objet portable comprenant les moyens (22) de mémorisation d'au moins une première liste d'au moins un identifiant d'au moins un destinataire autorisé des moyens pour identifier un porteur de l'objet portable.

10. Terminal selon l'une des revendications 7 à 9, dans lequel le terminal comprend, en outre, des moyens de mémorisation d'au moins une deuxième liste d'au moins un identifiant d'au moins un destinataire autorisé, ladite au moins une première et deuxième listes d'au moins un identifiant d'au moins un destinataire autorisé étant prises en compte pour filtrer le message entrant reçu.

11. Terminal selon la revendication 9 ou 10, elle-même dépendante de la revendication 9, dans lequel les moyens pour coopérer avec l'objet portable comprennent au moins une interface (23) de communication de type à contact.

12. Terminal selon la revendication 9 ou 10, elle-même dépendante de la revendication 9, dans lequel les moyens pour coopérer avec l'objet portable comprennent au moins une interface de communication de type sans contact.

13. Procédé (30) pour filtrer un message entrant non voulu, un objet portable comprenant des moyens de mémorisation d'au moins une première liste d'au moins un identifiant d'au moins un destinataire autorisé et des moyens de réception d'un message entrant depuis l'extérieur,
**caractérisé en ce que** le procédé comprend des étapes selon lesquelles l'objet portable met en oeuvre :
- une étape (36) de vérification d'un message entrant reçu et provenant d'un expéditeur, en fonction de ladite au moins une première liste,
- une étape de filtrage du message entrant reçu, selon laquelle, si l'expéditeur du message entrant reçu a un identifiant distinct de l'identifiant de chaque destinataire autorisé de ladite au moins une première liste, au moins une action prédéterminée (310) est effectuée.

14. Procédé pour filtrer un message entrant non voulu, un objet portable comprenant des moyens de mémorisation d'au moins une première liste d'au moins un identifiant d'au moins un destinataire autorisé et des moyens de réception d'un message entrant depuis l'extérieur, l'objet portable étant apte à coopérer avec un terminal, le terminal comprenant des moyens de mémorisation d'au moins une deuxième liste d'au moins un identifiant d'au moins un destinataire autorisé,
**caractérisé en ce que** le procédé comprend des étapes selon lesquelles l'objet portable met en oeuvre :
- une étape de vérification d'un message entrant reçu et provenant d'un expéditeur, en fonction d'au moins les première et deuxième listes,
- une étape de filtrage du message entrant reçu, selon laquelle, si l'expéditeur du message entrant reçu a un identifiant distinct de l'identifiant de chaque destinataire autorisé au moins des première et deuxième listes, au moins une action prédéterminée est effectuée.

15. Procédé selon la revendication 13 ou 14, dans lequel ladite au moins une action prédéterminée comprend au moins une étape appartenant au groupe comprenant :
- une étape de blocage d'annonce du message entrant reçu ;
- une étape d'effacement du message entrant reçu ;
- une étape de mémorisation du message entrant reçu ;
- une étape de changement d'état relatif au message entrant reçu et correspondant à un message entrant reçu et lu ;
- une étape de transmission à l'expéditeur d'un message prédéterminé ;
- une étape de transmission à un serveur ;
- une étape de transmission à un tiers d'un message prédéterminé.
